# EUROPÄISCHE PATENTSCHRIFT

(11) **EP 4 010 567 B1**
(45) Veröffentlichungstag und Bekanntmachung des Hinweises auf die Patenterteilung: **07.06.2023**
(21) Anmeldenummer: 20799618.2
(22) Anmeldetag: 02.10.2020
(51) Int. Cl.: F01K 3/12

(54) **THERMISCHER STROMSPEICHER MIT FESTBETT-WÄRMESPEICHER UND FESTBETT-KÄLTESPEICHER UND VERFAHREN ZUM BETREIBEN EINES THERMISCHEN STROMSPEICHERS**
THERMAL ENERGY STORAGE SYSTEM COMPRISING A PACKED-BED HEAT STORAGE UNIT AND A PACKED-BED COLD STORAGE UNIT, AND METHOD FOR OPERATING A THERMAL ENERGY STORAGE SYSTEM
SYSTÈME DE STOCKAGE D'ÉNERGIE THERMIQUE COMPRENANT UNE UNITÉ DE STOCKAGE DE CHALEUR À LIT TASSÉ ET UNE UNITÉ DE STOCKAGE DE FROID À LIT TASSÉ ET PROCÉDÉ PERMETTANT DE FAIRE FONCTIONNER UN SYSTÈME DE STOCKAGE D'ÉNERGIE THERMIQUE

(30) Priorität: 11.10.2019 DE 102019127431
(43) Veröffentlichungstag der Anmeldung: 15.06.2022
(73) Patentinhaber: Enolcon GmbH, 74321 Bietigheim-Bissingen (DE)
(72) Erfinder: SCHNEIDER, Günter, 74321 Bietigheim-Bissingen (DE); MAIER, Hartmut, 70195 Stuttgart-Botnang (DE)
(74) Vertreter: DREISS Patentanwälte PartG mbB
(86) Internationale Anmeldenummer: PCT/EP2020/077674
(87) Internationale Veröffentlichungsnummer: WO 2021/069327

(56) Entgegenhaltungen:
- EP-A1- 2 390 473
- EP-A1- 2 400 120
- DE-A1-102010 055 997
- US-A1- 2018 187 597

## Beschreibung

Die Erfindung betrifft ein Verfahren zur Speicherung elektrischer Energie (Stromspeicher) basierend auf einem an sich bekannten Kreisprozess. Die Wärmequelle ist ein Hochtemperatur-Wärmespeicher; die Wärmesenke ist ein Niedertemperatur-Wärmespeicher (Kältespeicher), der nachfolgend als Kältespeicher bezeichnet wird. Darüber hinaus verfügt der Kreisprozess mindestens über einen

Kompressor/Verdichter und eine Turbine. Der Kompressor und die Turbine sind mit einer elektrischen Maschine (Motor, Generator oder Motor-Generator) gekoppelt.

Die Speicherung elektrischer Energie gewinnt mit zunehmender Erzeugung elektrischer Energie durch Sonne und Wind an Bedeutung. Es sind verschiedene Systeme bekannt, wie zum Beispiel Pump-Speicher-Kraftwerke und Batteriespeicher, (Akkumulatoren), chemische Speicher und Hochtemperatur-Wärmespeicher. Ohne auf die Vor- und Nachteile der bekannten Speichersysteme einzugehen, lässt sich feststellen, dass es einen großen und weiter steigenden Bedarf an zuverlässigen, sicheren und wirtschaftlichen Stromspeichern gibt.

Die Erfindung betrifft das Gebiet der Thermischen Stromspeicher. In der US 2018/187597 A1, der EP 2 390 473 A1, der EP 2 400 120 A1, der US 2016/0298455 A1, der US 2019/0195671 A1, der US 2019/0212070 A1 und der US 2019/0195571 A1 werden solche thermischen Stromspeicher im Detail beschrieben. Der dort beschriebene Kreisprozess umfasst jeweils eine adiabate Verdichtung und eine adiabate Entspannung, eine isobare Wärmeübertragung bei hoher Temperatur und eine isobare Wärmeübertragung bei niedriger Temperatur. Dieser Kreisprozess ist als Joule-Prozess oder als "Brayton-cycle" bekannt.

Zum Beladen eines solchen thermischen Stromspeichers wird der Kreisprozess als linksläufiger (Wärmepumpen-)Kreisprozess betrieben. Dabei wird der Kompressor von einer elektrischen Maschine angetrieben. Die am Ausgang oder einer Zwischenstufe des Kompressors anfallende Hochtemperatur-Wärme wird im Hochtemperatur-Wärmespeicher gespeichert. Das gasförmige Arbeitsmedium hat nach der Entspannung in der Turbine eine sehr niedrige Temperatur von zum Beispiel -70 °C. Mit diesem sehr kalten Arbeitsmedium wird der flüssige Wärmeträger des Kältespeichers abgekühlt; der Kältespeicher wird beladen.

Zum Entladen des thermischen Stromspeichers wird die Anlage in einem rechtsläufigen "Arbeits"-Kreisprozess betrieben. Die dabei entstehende Arbeit, wird über eine von der Turbine angetriebenen elektrischen Maschine in elektrische Energie umgewandelt. Nachdem das Arbeitsmedium im Kompressor adiabat verdichtet (und damit auch erhitzt) wird, wird das Arbeitsmedium mit Wärme aus dem Hochtemperatur-Wärmespeicher weiter erhitzt, bevor es in der Turbine entspannt wird. Anschließend wird das Arbeitsmedium mit Hilfe des Kältespeichers abgekühlt, bevor es wieder zum Kompressor gelangt. Einzelheiten können den o. g. Offenlegungsschriften entnommen werden.

Als Speichermedium kommt in den in der US 2016/0298455 A1, der US 2019/0195671 A1, der US 2019/0212070 A1 und der US 2019/0195571 A1, beschriebenen Hochtemperatur-Wärmespeichern flüssiges Salz oder ein flüssiges Salz-Gemisch zum Einsatz. Die Betriebs-Temperaturen dieses Hochtemperatur-Wärmespeichers sind durch die SchmelzTemperatur (200°C bis 230°C) und die Zersetzungs-Temperatur (560°C bis 570°C) des Salzes oder des Salz-Gemisches vorgegeben. Damit liegt das Temperatur-Intervall innerhalb dessen der Salzspeicher als Wärmespeicher arbeitsfähig ist zwischen etwa 230 °C und 570°C. Dieses Temperatur-Intervall limitiert die Speicherkapazität des HochtemperaturWärmespeichers.

Aus der US 2018/0187597 A1, der EP 2 390 473 A1 und der EP 2 400 120 A1 sind thermische Stromspeicher bekannt, die auf der heißen Seite und auf der kalten Seite jeweils zwei Tanks für das flüssige Wärmespeichermedium aufweisen.

Damit ist auch die Temperatur des Arbeitsmediums am Turbinen-Eintritt vorgegeben und dementsprechend ist der Wirkungsgrad bei der Umwandlung der thermischen Energie in elektrische Energie relativ niedrig. Beides wirkt sich negativ auf den Strom-zu-Strom-Wirkungsgrad aus.

Der Kältespeicher arbeitet ebenfalls mit einem flüssigen Speichermedium, wie zum Beispiel dem Hexan, bei tiefen Temperaturen von etwa -50°C oder weniger. Die Betriebstemperatur des Kältespeichers wird nach unten durch den Gefrierpunkt/die Schmelztemperatur des flüssigen Speichermediums limitiert. Nach oben ist die Temperatur ebenfalls begrenzt, weil ein Verdampfen des Wärmespeichermediums verhindert werden muss.

Von großem Nachteil ist bei diesen Systemen auch der Umstand, dass mehrere Gas-Flüssigkeit-Wärmetauscher benötigt werden. Damit der Kreis-Prozess mit Salz und Kältemittel als Wärmeträger dennoch gute Wirkungsgrade erreicht, muss ein Gas-Gas-Wärmetauscher (Rekuperator) zwischen dem Turbinenaustritt und dem Kompressoreintritt eingesetzt werden.

Beim Einsatz von Salzschmelzen benötigt der HochtemperaturWärmespeicher mindestens drei Wärmetauscher, um ein Erstarren des flüssigen Salzes sicher zu verhindern. Weitere Gas-Flüssigkeit-Wärmetauscher werden beim Kältespeicher benötigt. Jeder Wärmetauscher verschlechtert den Wirkungsgrad des Gesamtprozesses durch seine Grädigkeiten.

Darüber hinaus ist der Betrieb eines derartigen Gesamtsystems sehr komplex, weil beim Anfahren und Umschalten zwischen Beladen und Entladen sichergestellt werden muss, dass die Temperaturen im Hochtemperatur-Wärmetauscher immer und an jedem Ort so hoch sind, dass ein Erstarren des Salzes sicher ausgeschlossen ist. Dazu muss nicht nur das Zusammenspiel zwischen der Verdichter- und der Turbinen-Seite des Kreisprozesses genau abgestimmt sein, sondern auch das Zusammenwirken der Massenströme der Flüssigkeiten bzw. der Pumpen der Tanksysteme auf der kalten und auf der heißen Seite. Diesem Thema wurde deshalb auch viel Aufmerksamkeit gewidmet in der oben genannten Patentfamilie.

Nicht zuletzt sind Salzspeichersysteme, die in der Literatur oftmals sehr vereinfachend nur als Zwei-Tanksystem mit einem Wärmetauscher und einer Pumpe dargestellt sind, in der Praxis komplexe Systeme mit großen isolierten Tanks, speziellen gekühlten Fundamenten, hohe Anforderungen an die Pumpen für das flüssige Salz und an Sicherheitssysteme gegen das Erstarren, Umwälzeinrichtungen. Zudem ist der Aufwand bei Wartungs- und Reparaturarbeiten hoch. Korrosion ist eine weitere Herausforderung. Nicht zuletzt sind auch die elektrischen Antriebsleistungen der Salzpumpen und der Kältemittelpumpen bei den kalten Tanks bei der Gesamtbilanz bzw. des Strom-zu-Strom-Wirkungsgrads als Eigenverbräuche zu berücksichtigen.

Der Erfindung liegt die Aufgabe zugrunde, einen thermischen Stromspeicher bereitzustellen, der die oben beschriebenen Nachteile des Standes der Technik vermeidet. Insbesondere sollen deutlich bessere Strom-zu-Strom-Wirkungsgrade bei reduzierten Kosten und geringeren Anforderungen an Werkstoffe und Bauteilsicherheit erreicht werden.

### Vorteile der Erfindung

Der Betrieb des erfindungsgemäßen thermischen Stromspeichers ist relativ einfach, ungefährlich und wirtschaftlich, weil die Betriebsdrücke in dem Kreisprozess relativ niedrig sind und die mineralischen Speichermaterialien ungiftig und einfach zu handhaben sind.

Die gasförmigen Wärmeträger des Hochtemperatur-Wärmespeichers und des Kältespeichers haben aufgrund der günstigen Anordnung des Speichermaterials nur einen relativ kleinen Strömungswiderstand zu überwinden und der Energiebedarf des Gebläses ist niedrig. Unter Berücksichtigung der Klappen und Leitungen liegt dieser auch bei sehr großen Systemen immer kleiner als 100 mbar, in der Regel je nach Detailauslegung sogar deutlich kleiner als 50 mbar. Die Speicher arbeiten bei Umgebungsruck. Damit können die Wandstärken der Speichermodule und der Leitungen sehr dünn ausfallen.

Der wesentliche Unterschied bei Einsatz dieses Hochtemperatur-Wärmespeichersystems als KältespeicherSystem liegt darin, dass bei Temperaturen unter 0°C vorzugsweise ein anderes Wärmetransportmedium als Luft zum Einsatz kommt, weil die in der Luft enthaltene Feuchte bei tiefen Temperaturen auskühlt und insbesondere die Klappen und das Gebläse einfrieren können. Deshalb wird ein entsprechendes Kältespeichersystem vorzugsweise als geschlossenes System ausgeführt mit Stickstoff N₂ oder Kohlendioxid CO₂ oder Argon Ar oder Helium He oder ein anderes Gas oder Gasgemisch welches bei den erforderlichen Betriebstemperaturen nicht kondensiert oder einfriert. Durch die erfindungsgemäßen Festbettspeicher als Hochtemperatur-Wärmespeicher und/oder als Kältespeicher kann der Kreisprozess mit wesentlich geringeren Drücken betrieben werden als bei Einsatz von Salzspeichern und Kältemitteln.

Dies führt dazu, dass vorzugsweise der Festbett-Kältespeicher direkt in den Wärmepumpenprozess integriert wird und man dadurch nicht nur den Wärmetauscher einspart, sondern auch den Wirkungsgrad verbessert, weil die Grädigkeiten im Wärmetauscher entfallen.

Mit den erfindungsgemäßen Festbettspeichern kann man Temperaturspreizungen von 900 °C oder mehr realisieren (Annahme: Speichertemperatur des Hochtemperatur-Wärmespeichers 800 °C; Speichertemperatur des Kältespeichers -100°C).

Bei den bekannten Systemen mit Flüssigsalz und einem flüssigen Speichermaterial im Kältespeicher beträgt die maximale Temperatur-Spreizung ca. 650°C (= 570°C - (-80°C)). Die Temperatur-Spreizung hat einen direkten Einfluss auf den Strom-zu Strom-Wirkungsgrad. Unter anderem deswegen ist der Strom-zu-Strom-Wirkungsgrad des erfindungsgemäßen thermischen Stromspeichers signifikant höher als der Strom-zu-Strom-Wirkungsgrad der oben genannten bekannten Systeme.

Untersucht man die Thermodynamik genauer so stellt man fest, dass man mit den vorgeschlagenen Festbettspeichern das Temperatur-Zusammenspiel der heißen und kalten Seite so optimieren kann, dass bei gleichem Prozessmedium im Kreisprozess die maximalen Drücke auf der heißen Seite mit ca. 8 - 14 bar (bei Stickstoff N₂) weit unter bei Einsatz eines Salzspeichersystems erforderlichen Drücken liegen, nämlich mehr als 60 bar (bei Einsatz von Stickstoff N₂) und mehr als 30 bar bei anderen Gasen (z.B. Argon Ar). Dies führt zu deutlichen Vereinfachungen bzgl. Materialwahl, erforderlichen Wandstärken, etc. und der Sicherheit.

Die eingangs genannte Aufgabe wird auch gelöst durch die Verfahren zum Beladen und Entladen nach den Ansprüchen 9 bis 12. Das Beladen und das Entladen unterscheiden sich nur durch die Richtung des Kreisprozesses. Die erste und die zweite Wärmeübertragungsanlage kann unverändert bleiben. D. h. die Betriebsführung ist denkbar einfach und robust. Weitere Vorteile und vorteilhafte Ausgestaltungen sind den nachfolgenden Zeichnungen und deren Beschreibungen entnehmbar.

### Zeichnung es zeigen:

Figuren 1 bis 5: Blockschaltbilder von Ausführungsbeispielen erfindungsgemäßer thermischer Stromspeicher;
Figuren 6 bis 11: Blockschaltbilder zur Erläuterung;
Figur 12: T-S-Diagramme eines thermischen Stromspeichers nach dem Stand der Technik und eines erfindungsgemäßen thermischen Stromspeichers,
Figuren 13 und 14: Schnitte durch Ausführungsbeispiele erfindungsgemäßer Speichermodule.

Beschreibung der Ausführungsbeispiele:
In den Figuren werden für gleiche Bauteile die gleichen Bezugszeichen verwandt und nur die für das Verständnis der Erfindung wesentlichen Komponenten und Bauteile dargestellt. Auch üblicherweise erforderliche weitere Einrichtungen für den Betrieb eines derartigen Systems werden nicht dargestellt. Selbstverständlich müssen Sicherheitsventile vorgesehen werden, der Niederdruckteil muss dicht absperrbar sein damit in den Kältespeichermodulen kein zu hoher Druck entstehen kann bei Ausfall der Turbine, Ausgleichsbehälter sind erforderlich etc. Auch eventuell erforderliche Zusatzkühlungen für einen stabilen Betrieb werden hier nicht dargestellt.

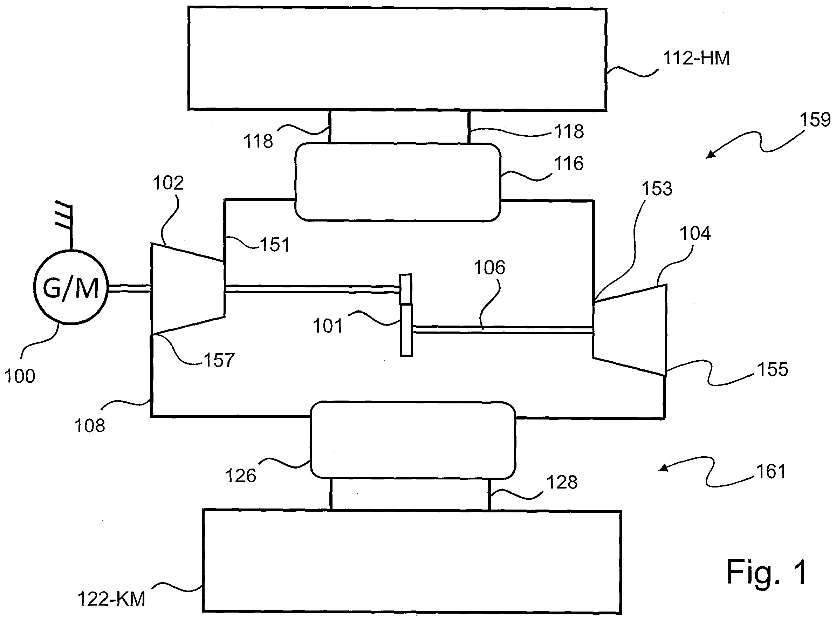

Der thermische Stromspeicher umfasst bei dem in Figur 1 dargestellten ersten Ausführungsbeispiel einen Kompressor 102, eine elektrische Maschine 100, und eine Turbine 104. Zwischen einem "Auslass" 151 des Verdichters 102 und einem "Einlass" 153 der Turbine 104 ist ein erster Wärmetauscher 116 angeordnet.

Zwischen einem "Auslass" 155 der Turbine 104 und einem "Einlass" 157 des Verdichters 102 ist ein zweiter Wärmetauscher 126 angeordnet. Die Begriffe "Auslass" und "Einlass" sind in Anführungszeichen gesetzt, da diese Bezeichnung einen linksläufigen "Wärmepumpen"- Kreisprozess unterstellen. Das System kann jedoch auch als rechtsläufiger "Arbeits"-Kreisprozess betrieben werden. Dann wird der Kompressor 102 als Entspannungsturbine betrieben; die Turbine 104 wird als Kompressor betrieben und die Strömungsrichtung des Arbeitsmediums ändert sich ebenfalls.

Der erste Wärmetauscher 116 ist über eine erste Wärmeübertragungsanlage 159 mit einem Festbett-Hochtemperaturwärmespeicher 112-HM gekoppelt. Von der ersten Wärmeübertragungsanlage 159 sind in der Figur 1 nur zwei Leitungen 118 sichtbar.

Der zweite Wärmetauscher 126 ist über eine zweite Wärmeübertragungsanlage 161 mit einem Festbett-Kältespeicher 122-KM gekoppelt. Von der zweiten Wärmeübertragungsanlage 161 sind in der Figur 1 nur zwei Leitungen 128 sichtbar.

Beide Wärmeübertragungsanlagen 159, 161 arbeiten mit einem gasförmigen Wärmeträger, der beim Beladen Wärme auf das feste Speichermaterial des Hochtemperaturwärmespeichers 112-HM überträgt; beim Entladen nimmt er Wärme von dem heißen Speichermaterial auf. Beim Beladen des Kältespeichers 122-KM führt der Wärmeträger Wärme aus dem Speichermaterial ab, so dass es abgekühlt wird. Beim Entladen gibt er Wärme an das Speichermaterial des Kältespeichers 122-KM ab und kühlt dadurch ab.

Die zweite Wärmeübertragungsanlage 161 kann zum Beispiel mit Argon, Stickstoff N₂, CO₂ und anderen Gasen oder Gasgemischen als Wärmeträger betrieben werden. In der ersten Wärmeübertragungsanlage 159 kann darüber hinaus auch Luft als Wärmeträger eingesetzt werden.

Der Hochtemperaturwärmespeicher 112-HM und der Kältespeicher 122-KM sind prinzipiell gleich aufgebaut. Aufbau und Funktion werden in der DE 10 2010 055 997 A1 sowie der darauf basierenden WO 2012/017041 A1 beschrieben auf die hiermit Bezug genommen wird.

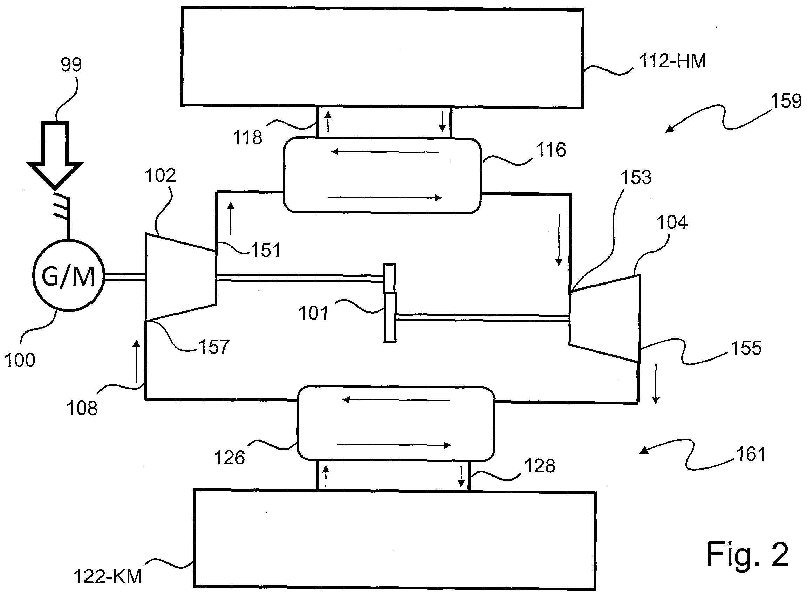

In der Figur 2 wird der thermische Stromspeicher beladen. Die zugehörigen Strömungsrichtungen der drei gasförmigen Medien sind in der Figur 2 durch Pfeile angedeutet. Beim Beladen wird die elektrische Maschine 100 als Motor genutzt; sie treibt den Kompressor 102 an. Es findet somit ein linksläufiger Wärmepumpen-Kreisprozess statt.

In dem ersten Wärmetauscher 116 findet eine Wärmeübertragung von dem heißen Arbeitsmedium 108 auf den ebenfalls gasförmigen Wärmeträger der ersten Wärmeübertagungsanlage 159 statt.

Mit dem dadurch erhitzten Wärmeträger der ersten Wärmeübertragungsanlage 159 wird der Hochtemperatur-Wärmespeicher 112-HM beladen.

In dem zweiten Wärmetauscher 126 findet eine Wärmeübertragung von dem aus der Turbine 104 austretenden sehr kalten Arbeitsmedium 108 (Temperatur zum Beispiel - 100°C) auf den gasförmigen Wärmeträger der zweiten Wärmeübertragungsanlage 161 statt. Mit dem dementsprechend abgekühlten Wärmeträger der zweiten Wärmeübertragungsanlage 161 wird der Kältespeicher 122-KM beladen, d. h. abgekühlt.

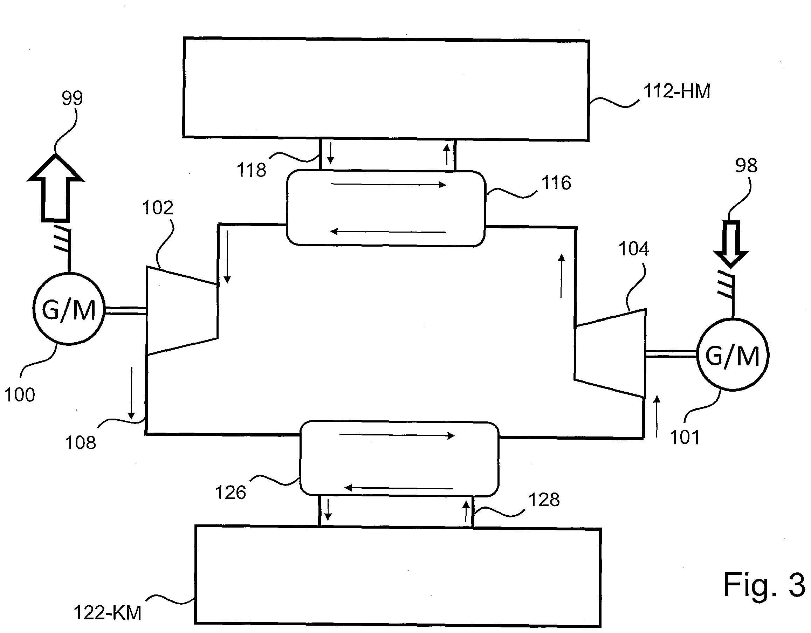

Das Entladen eines erfindungsgemäßen thermischen Stromspeichers wird anhand eines zweiten in Figur 3 dargestellten Ausführungsbeispiels erläutert. Bei dem zweiten Ausführungsbeispiel sind der Kompressor 102 und die Turbine 104 nicht mechanisch gekoppelt; dafür sind sowohl der Kompressor 102 als auch die Turbine 104 jeweils mit einer elektrischen Maschine 100, 101 gekoppelt. Die Funktionsweise aller Ausführungsformen ist im Wesentlichen gleich, so dass das Beladen und Entladen exemplarisch an einer Ausführungsform erläutert wird. Die Übertragung auf die anderen Ausführungsformen ist einem Fachmann ohne weiteres möglich, da das Funktionsprinzip bei allen Ausführungsformen gleich ist oder zumindest starke Übereinstimmungen aufweist.

Beim Entladen arbeitet die "Turbine" 104 als Kompressor und wird von der elektrischen Maschine 101 angetrieben.

In dem ersten Wärmetauscher 116 wird das bereits durch die Verdichtung in der "Turbine" 104 erhitzte Arbeitsmedium weiter erhitzt. Das geschieht dadurch, dass der Wärmeträger der ersten Wärmeübertragungsanlage 159 durch das heiße Speichermaterial des Hochtemperaturwärmespeichers 112-HM gefördert wird und dabei auf bis zu 1000 °C oder mehr erhitzt wird. Diese Hochtemperaturwärme wird im ersten Wärmetauscher 116 auf das Arbeitsmedium übertragen.

Dementsprechend kühlt der Wärmeträger der zweiten Wärmeübertragungsanlage 161 im zweiten Wärmetauscher 126 das Arbeitsmedium vor dem Eintritt bei 155 in die als Kompressor arbeitenden Turbine 104 ab und entlädt dadurch den Kältespeicher 122-KM.

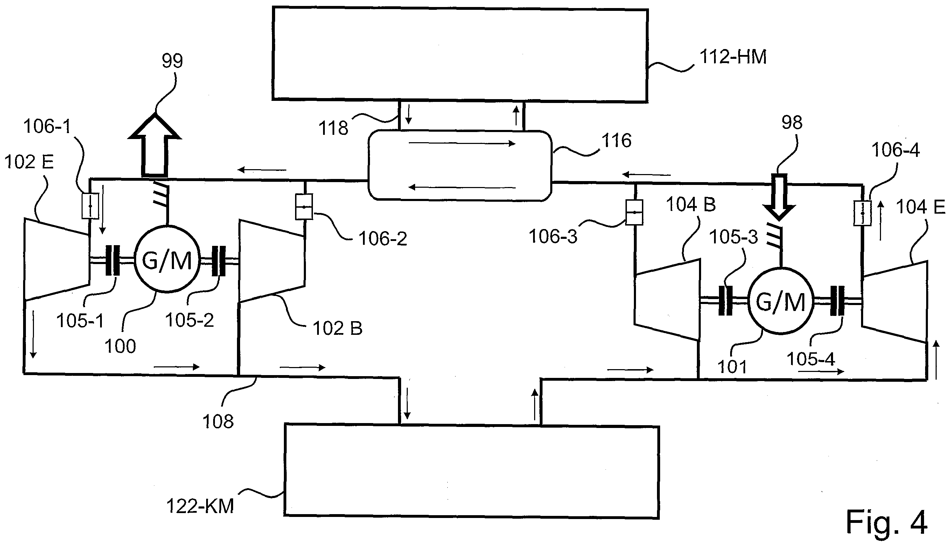

In der Figur 4 wird eine weitere Ausführungsform schematisch dargestellt. Sie trägt dem Umstand Rechnung, dass es oftmals nicht möglich ist, die ein- oder mehrstufige Turbine 104 so auszulegen, dass sie auch im Betrieb als Kompressor mit einem guten bis sehr guten Wirkungsgrad arbeitet. Entsprechendes gilt für den ein- oder mehrstufigen Kompressor 102.

Bei dieser Ausführungsform sind jeweils zwei Kompressoren 102-B, 104-E und Turbinen 104 B und 102 E vorhanden. Es sind zwei elektrische Maschinen 100, 101 vorhanden, die im Generator- und Motor-Betrieb arbeiten können. Kupplungen 105 können die die erforderlichen Systemkomponenten (Verdichter und Turbinen) mit einer elektrischen Maschine verbunden werden und die inaktiven abgekoppelt werden.

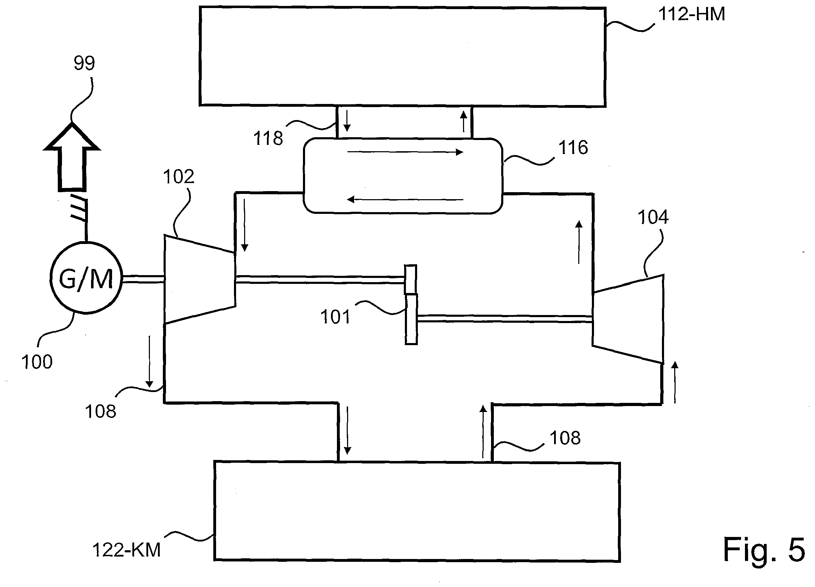

Bei dem in den Figuren 4 und 5 dargestellten Ausführungsbeispielen ist nur ein erster Wärmetauscher 116 und eine erste Wärmeübertragungsanlage 159 vorhanden. Anders als bei den zuvor beschriebenen Ausführungsbeispielen strömt das Arbeitsmedium des Kreisprozesses direkt durch den Kältespeicher 122-KM. Der zweite Wärmetauscher 126 und die zweite Wärmeübertragungsanlage 161 sind entfallen und das Arbeitsmedium des Kreisprozesses strömt direkt durch den Kältespeicher 122-KM.

Das hat viele Vorteile. Der offensichtlichste ist vielleicht, dass sich die Investitionskosten und der Platzbedarf deutlich verringern. Darüber hinaus verbessert sich auch der Strom-zu-Strom-Wirkungsgrad des thermischen Stromspeichers, weil die Grädigkeiten beim Übergang vom Speichermaterial auf den Wärmeträger der zweiten Wärmeübertragungsanlage 161 und von diesem Wärmeträger auf das Arbeitsmedium des Kreisprozesses im zweiten Wärmetauscher 126 entfallen.

Auf der Hochtemperatur-Seite laufen das Beladen und Entladen unverändert und wie zuvor beschrieben ab. Das Be- und Entladen des Kältespeichers 122-KM erfolgt indem das Arbeitsmedium durch den Kältespeichers 122-KM strömt.

In der Figur 4 wird der thermische Stromspeicher entladen. Das ergibt sich aus Schaltstellungen der Armaturen 106-1 bis 106-4 sowie den Strömungsrichtungen des Arbeitsmediums und der Wärmeträger der Wärmeübertragungsanlagen 159 und 161. Beim Entladen wird der Kompressor 104 E von der elektrischen Maschine 101 angetrieben. Die Kupplung 105-4 ist geschlossen und die Kupplung 105-3 ist offen. Die Turbine 102 E treibt die elektrische Maschine 100, welche über die Leitung 99 Strom in das Netz einspeist. Die Kupplung 105-1 ist geschlossen und die Kupplung 105-2 ist offen.

Die Armaturen 106-1 und 106-4 sind offen. Die Armaturen 106-2 und 106-3 sind geschlossen, so dass der nicht genutzte Kompressor 102-B und die nicht genutzte Turbine 104 B von dem Kreisprozess abgetrennt sind.

Zum Laden des thermischen Stromspeichers wird der Kompressor 102 B von der elektrischen Maschine 100 angetrieben. Die Kupplung 105-3 ist geschlossen und die Kupplung 105-4 ist offen. Die Turbine 104 B treibt die elektrische Maschine 101, welche über die Leitung 98 Strom in das Netz einspeist. Die Kupplung 105-2 ist geschlossen und die Kupplung 105-1 ist offen.

Die Armaturen 106-2 und 106-3 sind offen. Die Armaturen 106-1 und 106-4 sind geschlossen, so dass der nicht genutzte Kompressor 104 E und die nicht genutzte Turbine 102 E von dem Kreisprozess abgetrennt sind.

Das in Figur 5 dargestellte Ausführungsbeispiel ist gewissermaßen eine Variante des in Figur 1 dargestellten Ausführungsform bei der, wie in Figur 4 dargestellt und im Zusammenhang damit erläutert, das Arbeitsmedium direkt durch den Kältespeicher strömt; der zweite Wärmetauscher 126 und die zweite Wärmeübertragungsanlage 161 sind entfallen.

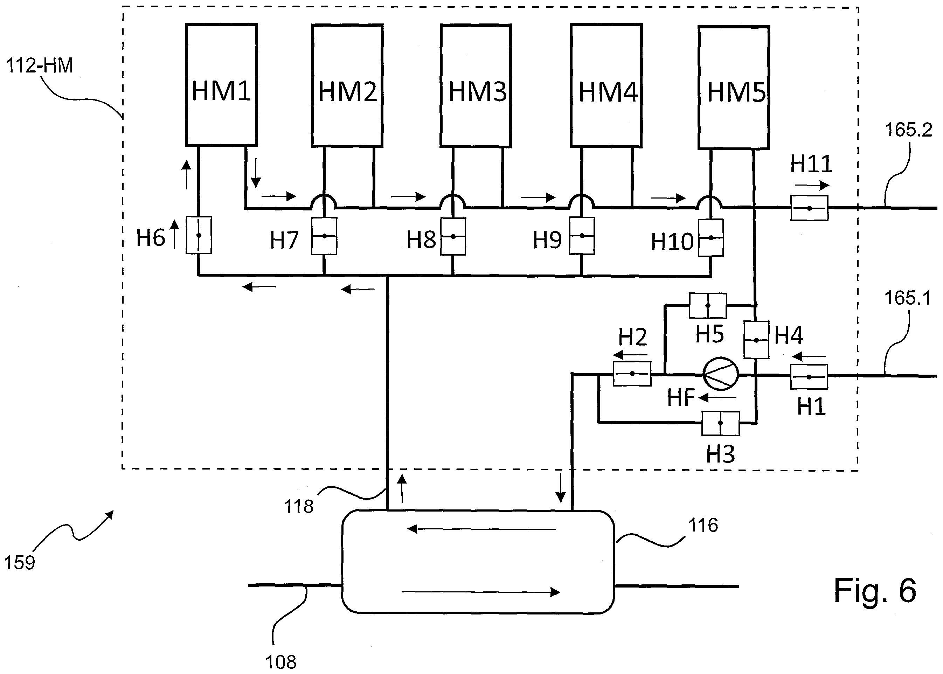

In den Figuren 6 bis 12 sind etwas detailliertere Darstellungen insbesondere des Hochtemperatur-Wärmespeichers
112-HM, des Kältespeichers 122-KM, der ersten Wärmeübertragungsanlage 159 und der zweiten Wärmeübertragungsanlage 161.

In Figur 6 sind der Hochtemperatur-Wärmespeicher 112-HM und die erste Wärmeübertragungsanlage 159 etwas detaillierter dargestellt. Der Hochtemperatur-Wärmespeicher 112-HM umfasst mehrere Hochtemperatur-Wärmespeicher-Module HM1 bis HM5, wobei die Zahl der Module frei wählbar ist. Grundsätzlich kann die Anzahl der Module beliebig groß sein, d.h. über die Zahl der Module kann die zu speichernde Wärmemenge beliebig erhöht werden. Jedes Modul HM ist über zwei Leitungen (ohne Bezugszeichen) an die erste Wärmeübertragungsanlage 159 angeschlossen.

Die in Figur 6 dargestellte erste Wärmeübertragungsanlage 159 ist ein offenes System; d. h. sie arbeitet mit Umgebungsluft als Wärmeträger. Über die Leitungen 165 kann Umgebungsluft angesaugt bzw. Luft aus dem Hochtemperatur-Wärmespeicher 112-HM an die Umgebung abgegeben werden. Innerhalb des Hochtemperatur-Wärmespeichers 112-HM sind ein Gebläse HF, sowie Klappen H1 bis H11 vorhanden. Mit Hilfe der Klappen H2 bis H5 kann die Strömungsrichtung des Wärmeträgers umgekehrt werden. Alternativ ist es auch möglich, ein zweites Gebläse (nicht dargestellt), das in die entgegengesetzte Richtung fördert, zu installieren.

Die Leitungen innerhalb des Hochtemperatur-Wärmespeichers 112-HM haben aus Gründen der Übersichtlichkeit keine Bezugszeichen. Über die Leitungen 118 ist die erste Wärmeübertragungsanlage 159 an den ersten Wärmetauscher 116 angebunden. Man kann gedanklich auch den von dem Wärmeträger Luft durchströmten Teil des ersten Wärmetauschers 116 der ersten Wärmeübertragungsanlage 159 zurechnen.

In der Figur 6 sind die Klappen H1 bis H11 so geschaltet, dass das Speichermodul HM1 beladen wird, wobei Umgebungsluft als Wärmeträger eingesetzt wird. Die für das Beladen erforderliche Umgebungsluft wird über die Leitung 165.1 und die geöffnete Klappe H1 von dem Gebläse HF angesaugt und über die geöffnete Klappe H2 dem ersten Wärmetauscher 116 zugeführt. Im ersten Wärmetauscher 116 gibt das Arbeitsmedium 108 des Kreisprozesses seine Hochtemperaturwärme an die Umgebungsluft (Wärmeträger) ab.

Die nun heiße Luft wird über Leitungen und über die geöffnete Klappe H6 dem Modul HM1 zugeführt. Im Modul HM1 durchströmt der Wärmeträger "Luft" gleichzeitig das im Modul HM1 enthaltene Speichermaterial (z. B. Sand, Schotter, Kies, Steine, Keramikgranulat, Metalloxid-/Silikatgranulate, etc.) und überträgt die Wärme an das Speichermaterial. Danach verlässt die abgekühlte Luft das Modul HM1 des Hochtemperaturwärmespeichers 112-HM. Sobald das Modul HM1 vollständig geladen ist, wird auf das Modul HM2 umgeschaltet, indem die Klappe H6 geschlossen und die Klappe H7 geöffnet wird. Auf diese Weise können die Module HM1 bis HM5 nacheinander beladen werden.

Es ist auch möglich mehrere Module HM gleichzeitig parallel zu beladen. Dazu müssen nur die entsprechenden Klappen geöffnet werden. Beispielsweise müssen beim parallelen Beladen der Module HM3 und HM4 die Klappen H8 und H9 geöffnet werden; die Klappen H6, H7 und H10 bleiben dabei geschlossen, um eine Durchströmung der Module HM1, HM2 und HM5 zu verhindern.

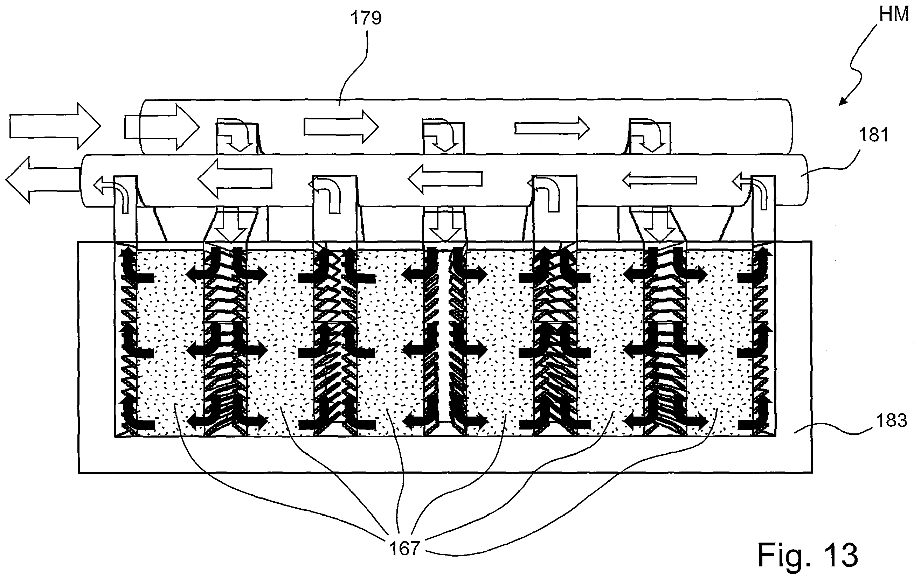

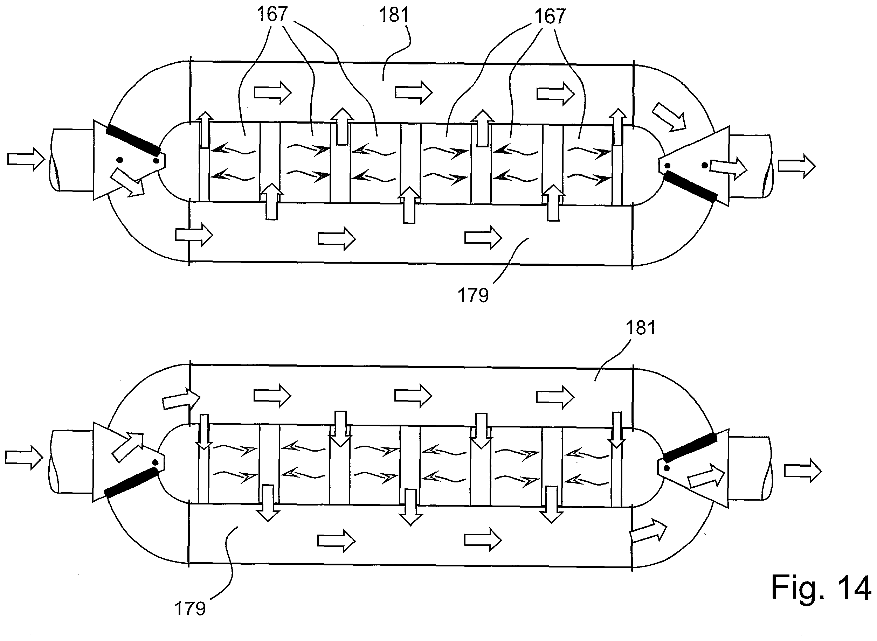

Oftmals kann es von Vorteil sein, wenn man kurz bevor ein Modul HM vollständig beladen ist und die Temperatur hinter dem sich in Beladung befindlichen Modul ansteigt (dies ist der Fall, wenn der Thermokline die Austrittsfläche einer Speichermaterial-Wand erreicht hat, siehe dazu weiter unten die Beschreibung der Figuren 13 und 14) ein zweites entladenes Modul in Reihe hinter das fast fertig beladene Modul schaltet. Damit können Wärmeverluste verhindert werden.

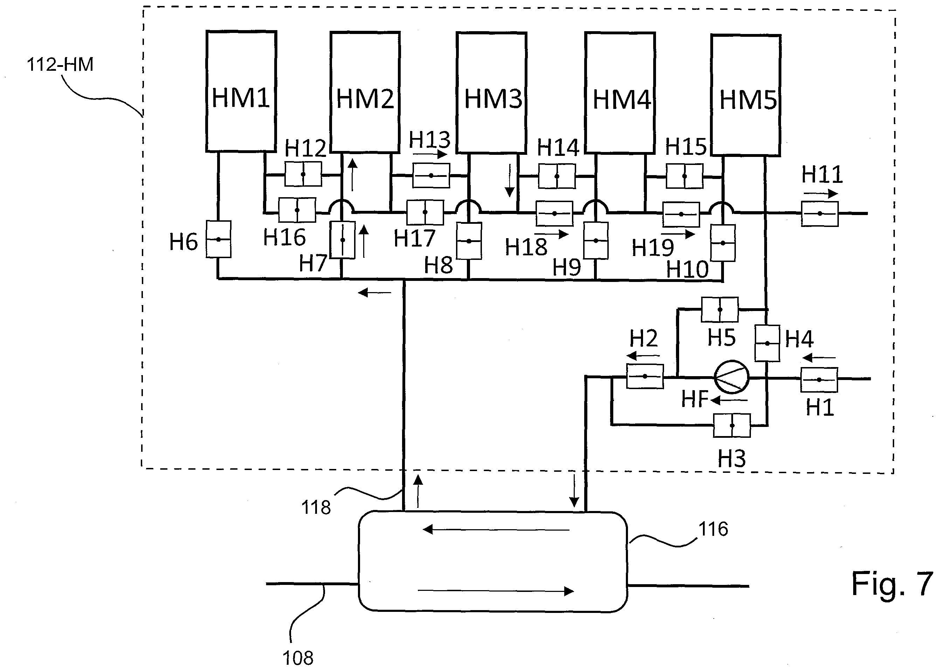

Figur 7 zeigt beispielhaft eine Schaltung eines Hochtemperatur-Wärmespeichersystems bei der diese Betriebsart möglich ist. Dazu sind mehr Klappen erforderlich als bei dem in Figur 6 dargestellten Ausführungsbeispiel. Die zusätzlichen Klappen sind mit H12, H13, H14, H15, H16, H17, H18 und H19 bezeichnet. In dieser Schaltungsvariante können nun mehrere Module parallel beladen oder entladen werden oder aber auch in Reihe geschaltet betrieben werden.

In Figur 7 ist das Beladen von Modul HM2 und HM3 dargestellt, die in Reihe geschaltet sind. Dabei durchströmt in dieser Ausführung die Umgebungsluft als Wärmeträgermedium 118 die geöffnete Klappe H1, danach das Gebläse HF und die Klappe H2 und wird im Wärmetauscher 116 aufgeheizt. Über entsprechende Leitungen und die Klappe H7 wird die heiße Luft nun dem Modul HM2 zugeführt und durchströmt dort das Speichermaterial. Wenn der Thermokline die Austrittsfläche des Wärmeträgers aus den Speicherwänden erreicht hat, verlässt die Luft das Modul HM2 mit einer höheren Temperatur als dies der Fall ist, wenn das Modul HM2 noch nicht so voll beladen ist. Um diese Wärme nicht zu verlieren, wird nun diese nur teilweise abgekühlte Luft über die geöffnete Klappe H13 dem noch nicht beladenen Modul HM3 zugeführt. Nachdem die Luft ihre Restwärme an das Speichermaterial im Modul HM3 abgegeben hat verlässt die vollständig abgekühlte Luft das Hochtemperatur-Wärmespeichersystem über die geöffneten Klappen H18, H19 und H11.

Das Beladen ist auch möglich, wenn die erste Wärmeübertragungsanlage 159 als geschlossenes System betrieben wird. Dann werden die Klappen H1 und H11 geschlossen und die Klappe H4 geöffnet. Dann zirkuliert der Wärmeträger in der ersten Wärmeübertragungsanlage 159. Selbstverständlich ist auch das Beladen möglich, wenn die erste Wärmeübertragungsanlage 159 als geschlossenes System betrieben wird. Das System muss geschlossen sein, wenn als Wärmeträger ein geeignetes Gas eingesetzt werden soll (z.B. Stickstoff N₂, Argon Ar oder Kohlendioxid CO₂). Im Betrieb als geschlossenes System entfallen die Klappen H1 und H11.

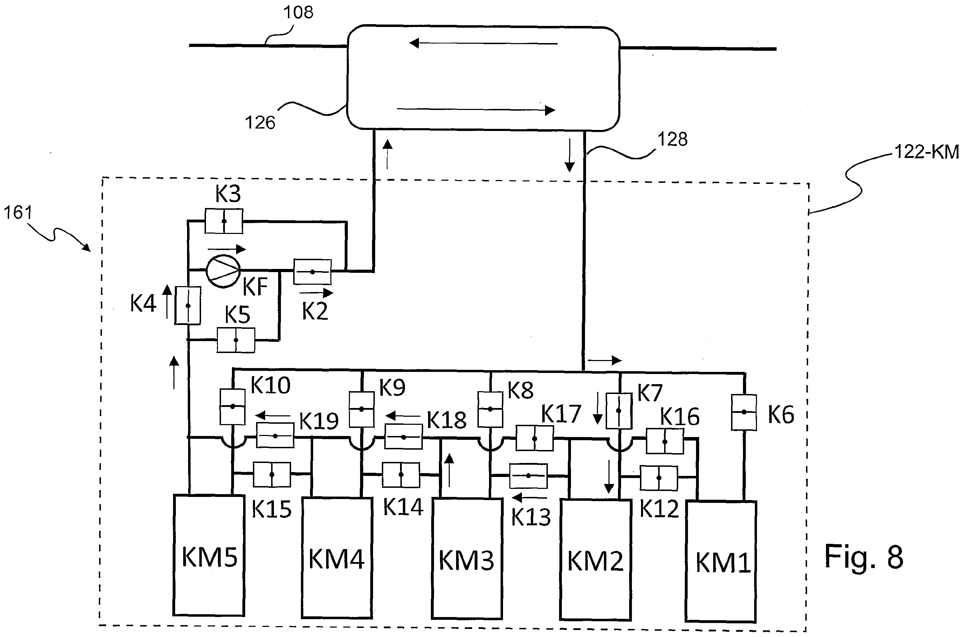

In Figur 8 sind der Kältespeicher 122-KM und die zweite Wärmeübertragungsanlage 161 etwas detaillierter dargestellt. Der Kältespeicher 122-KM umfasst mehrere Kältespeicher-Module KM1 bis KM5, wobei die Zahl der Module frei wählbar ist. Grundsätzlich kann die Anzahl der Module beliebig groß sein, d.h. über die Zahl der Module kann die Menge der zu speichernden Kälte beliebig erhöht werden. Jedes Modul KMI ist über zwei Leitungen (ohne Bezugszeichen) an die zweite Wärmeübertragungsanlage 161 angeschlossen. Die Zahl der Module HM und KM muss nicht gleich sein.

Die zweite Wärmeübertragungsanlage 161 ist immer ein geschlossenes System, da sie nicht mit Umgebungsluft als Wärmeträger arbeiten kann. Innerhalb des Kältespeichers 122-KM sind ein Gebläse KF, sowie Klappen K2 bis K15 vorhanden. Mit Hilfe der Klappen K2 bis K5 kann die Strömungsrichtung des Wärmeträgers umgekehrt werden.

Die Leitungen innerhalb des Kältespeichers 122-KM haben aus Gründen der Übersichtlichkeit keine Bezugszeichen. Über die Leitungen 128 ist die zweite Wärmeübertragungsanlage 161 an den zweiten Wärmetauscher 126 angebunden.

Figur 8 zeigt die zweite Wärmeübertragungsanlage 161 beim Beladen des Kältespeichers 122-KM, genauer gesagt des Moduls KM2. Dabei wird der Wärmeträger im zweiten Wärmetauscher 126 abgekühlt und der Wärmeträger über eine der Leitungen 128 und die geöffnete Klappe K7 dem Modul KM2 zugeführt. Beim Durchströmen des Moduls KM2 kühlt der Wärmeträger das Speichermaterial ab und der Wärmeträger erwärmt sich.

Nach dem Verlassen des Moduls KM2 wird der Wärmeträger über die geöffnete Klappe K13 dem Modul KM3 zugeführt, d.h. in vorliegendem Beispiel werden die beiden Module KM2 und KM3 nacheinander von dem Wärmeträger durchströmt. Der "aufgewärmte" Wärmeträger wird dann über die geöffnete Klappen K18, K19 und K4 dem Gebläse KF zugeführt. Das Gebläse KF befördert den Wärmeträger über die geöffnete Klappe K2 und die andere Leitung 128 wieder zum zweiten Wärmetauscher 126. Dort gibt der Wärmeträger seine Wärme an das im Gegenstrom strömende Arbeitsmedium des Kreisprozesses 108 ab; der Wärmeträger kühlt ab und wird dann wieder einem oder mehreren Modulen KM zugeleitet.

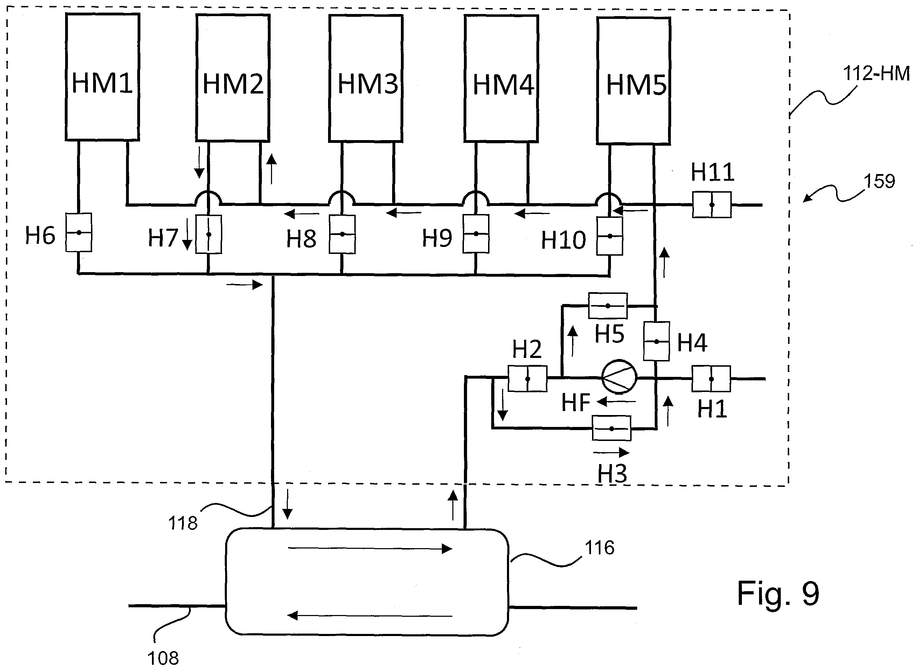

In der Figur 9 ist das Entladen des Moduls HM2 des Hochtemperaturspeichers 112-HM beispielhaft als geschlossener Prozess 6 dargestellt; d. h. die Klappen H1 und H11 sind geschlossen.

Gegenüber dem Beladen wird die Strömungsrichtung umgekehrt. Dies kann über ein zweites Gebläse geschehen welches in die entgegengesetzte Richtung zum Beladen arbeitet oder aber über das gleiche Gebläse HF bei dem die Durchströmungsrichtung über die Klappen H2 bis H5 umgekehrt wird. D.h. beim Entladen durchströmt der aus dem ersten Wärmetauscher 116 angesaugte Wärmeträger (Luft, Stickstoff, Argon, ...) die geöffnete Klappe H3 und danach das Gebläse HF welches den Wärmeträger durch die geöffnete Klappe H5 durch die Leitungen zu dem Modul HM2 befördert. Der Wärmeträger durchströmt das Modul HM2 und das darin enthaltene Speichermaterial und strömt über die geöffnete Klappe H7 zum ersten Wärmetauscher 116. Dort gibt der Wärmeträger seine Wärme an das Wärmeträgermedium des Kreisprozesses ab. Der abgekühlte Wärmeträger wird nun wieder über eine Leitung 118 Leitungen und die Klappe H3 dem Gebläse HF zugeführt.

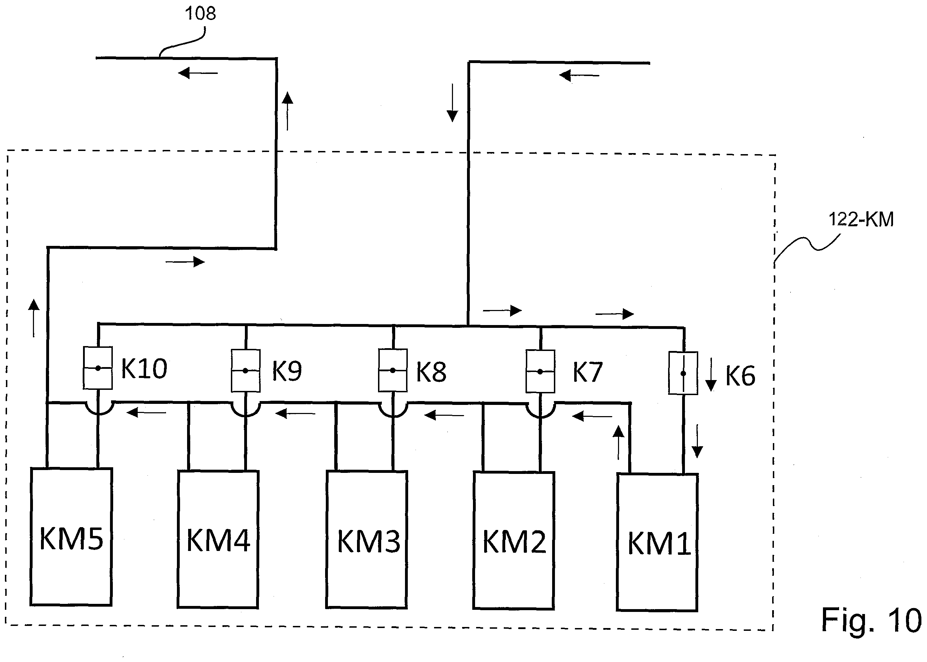

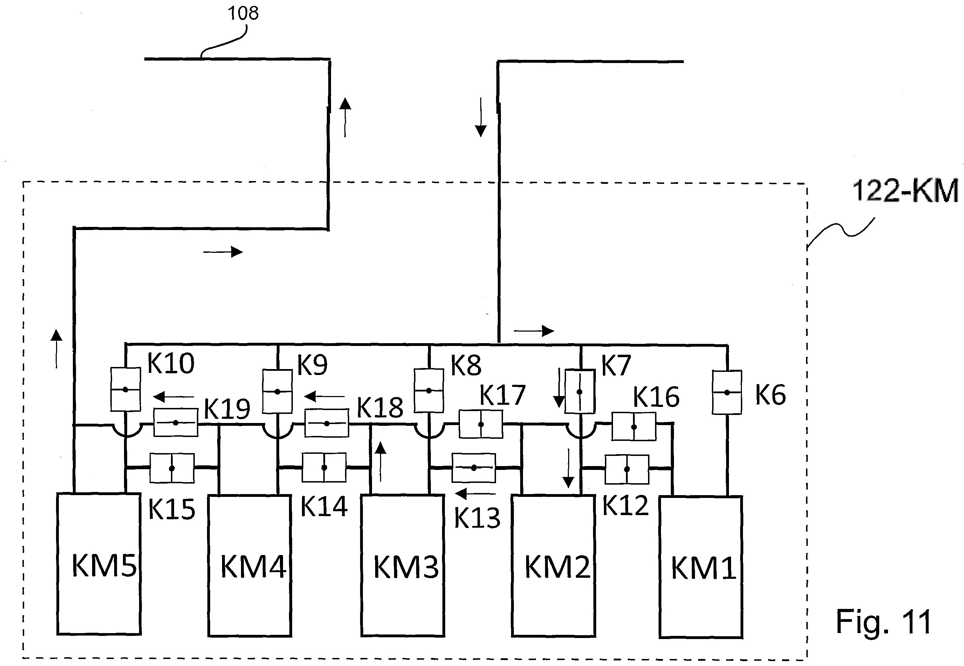

Anhand der Figuren 10 und 11 wird das Beladen des Kältespeichers 122-KM ohne zweiten Wärmetauscher 126 und ohne zweite Wärmeübertragungsanlage 161 (siehe dazu auch die Figuren 4 und 5) dargestellt.

Figur 10 zeigt das direkte Beladen des Moduls KM1. Dabei wird das Arbeitsmedium des Kreisprozesses, nachdem es die Turbine verlassen hat und sehr kalt ist, in einer Leitung und die geöffnete Klappe K6 dem Modul KM1 zugeführt. Beim Durchströmen des Moduls KM1 kühlt das Arbeitsmedium das Speichermaterial ab und erwärmt sich. Danach wird das Arbeitsmedium dem Kompressor zugeführt.

In der Figur 11 ist das Beladen der Module KM2 und KM3 in Reihe dargestellt, d.h. Klappen K7 und K13 sind geöffnet und die Module KM2 und KM3 werden nacheinander von dem Arbeitsmedium durchströmt. Das "aufgewärmte" Arbeitsmedium gelangt über die geöffneten Klappen K18, K19 zum dem Kompressor.

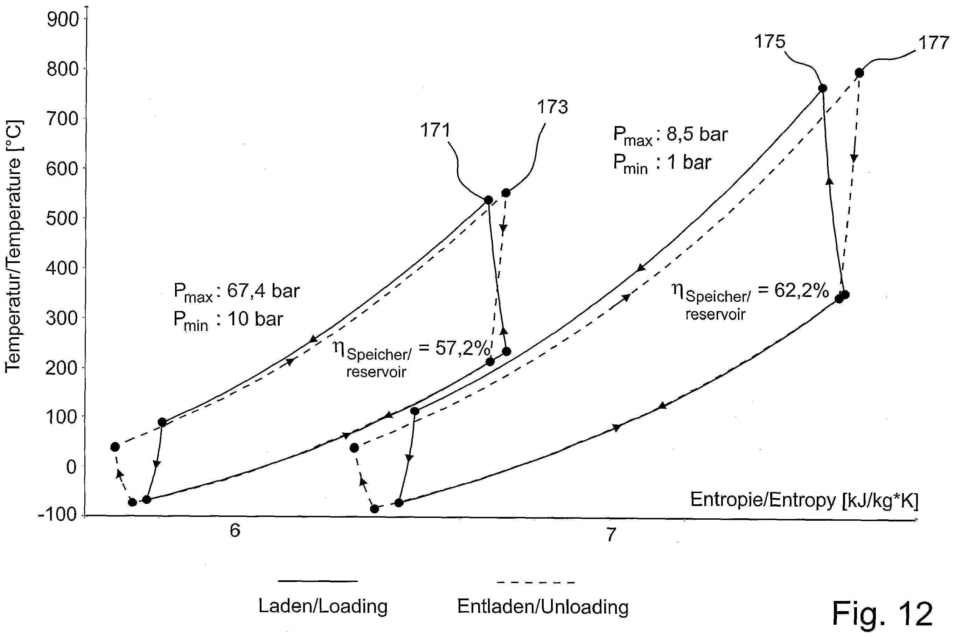

In der Figur 12 werden der aus der US 2019/0195571 A1 bekannte thermische Stromspeicher mit Flüssig-Salz und flüssigen Kältemittel als Wärmespeicher mit einem erfindungsgemäßen thermischen Stromspeicher verglichen. Figur 12 zeigt für gewählte praktische Parameter für Grädigkeiten und Druckverluste und Eigenverbräuche zwei T_S-Diagramme, beiden Prozessen liegt die gleiche zu speichernde elektrische Leistung bzw. Strommenge zugrunde.

Die Linie 171 zeigt den beim Beladen eingesetzten linksläufigen Wärmepumpen-Kreisprozess des aus der US 2019/0195571 A1 bekannten thermischen Stromspeichers.

Die Linie 173 zeigt den beim Entladen eingesetzten rechtsläufigen Kreisprozess des aus der US 2019/0195571 A1 bekannten thermischen Stromspeichers.

In entsprechender Weise zeigt die Linie 175 den beim Beladen eingesetzten linksläufigen Wärmepumpen-Kreisprozess des erfindungsgemäßen thermischen Stromspeichers.

Die Linie 177 zeigt den beim Entladen eingesetzten rechtsläufigen Kreisprozess des erfindungsgemäßen thermischen Stromspeichers.

Schon aus dem Vergleich der T-S-Diagramme und der in Figur 12 angegebenen Druckbereiche (pₘₐₓ 67,4 bar versus pₘₐₓ = 8,5 bar) wird deutlich, dass der erfindungsgemäße thermische Stromspeicher unter dem Gesichtspunkt der Anlagensicherheit sehr vorteilhaft ist. Auch der Vergleich der Strom-zu-Strom-Wirkungsgrade fällt mit 62,2 % zu 57,2 % sehr deutlich zugunsten des erfindungsgemäßen thermischen Stromspeichers aus.

In der Figur 13 ist ein Schnitt durch ein Ausführungsbeispiel eines Speichermoduls HM oder KM mit sechs Wänden 167, die aus Speichermaterial bestehen, dargestellt. Die Wände 167 sind porös, so dass der Wärmeträger (Luft, Gas) der Wärmeübertragungsanlagen 159 bzw. 161 durch die hindurchströmen kann. Das bevorzugt mineralische Speichermaterial (Sand, Kies, Basalt, Keramikgranulat, Metalloxid-/Silikatgranulate, etc.) hat einen mittleren Durchmesser von weniger als 8 mm, vorzugsweise 1 - 3 mm, und ist in mehreren Schichten bzw. Wänden 167 angeordnet, die gleichzeitig horizontal durchströmt werden. Auch eine radiale Durchströmung von Speicherschichten ist denkbar. In der DE 102010 055 997 A1 und der DE 10 2010 033 571 A1 der Anmelderin werden verschiedene Anordnungen des Speichermaterials und Durchströmungsrichtungen dargestellt und erläutert.

Die Anzahl und Dicke der Wände 167 hängen von den jeweiligen Anforderungen an den Speicher ab (z.B. maximal zulässiger Druckverlust), die Dicke liegt in der Größenordnung von 0,3 - 2,5 m.

Über eine Leitung 179 wird der Wärmeträger in drei Zwischenräume zwischen den Wänden 167 geleitet.

Über eine Leitung 181 wird der Wärmeträger aus zwei Zwischenräumen zwischen zwei Wänden 167 geleitet. Außerdem ist die Leitung 181 mit den Zwischenräumen zwischen einem Gehäuse 183 des Speichermoduls HM, KM verbunden. Dadurch ist es möglich, dass alle sechs Wände 167 gleichzeitig und über deren gesamte Fläche von dem Wärmeträger durchströmt werden. Das reduziert den Druckverlust erheblich und ermöglicht trotzdem einen sehr gute und schnelle Wärmeübertagung vom Wärmeträger auf das Speichermaterial und umgekehrt.

In Figur 13 sind die Ein- und Abströmleitungen 179, 181 oberhalb der Speichermaterial-Wände angeordnet, diese können jedoch auch seitlich oder von unten den Wärmeträger (Gas oder Luft) zwischen die Wände einleiten bzw. wieder ausleiten. Dabei sind beliebige Kombinationen möglich, beispielsweise kann von der einen Seite das Speichermodul beladen werden und auf der anderen Seite entladen werden. Wie bereits erwähnt kann das Speichermaterial auch auf andere Weise, nämlich zum Beispiel radial oder von unten nach oben, durchströmt werden.

In der Figur 14 sind Schnitte durch ein weiteres Ausführungsbeispiel eines Speichermoduls HM oder KM mit sechs Wänden 167, die aus Speichermaterial bestehen, dargestellt ist. Die Wände 167 sind porös, so dass der Wärmeträger (Luft, Gas) der Wärmeübertragungsanlagen 159 bzw. 161) durch die Wände hindurchströmen kann.

Im oberen Teil der Figur 14 ist das beladen des Speichermoduls dargestellt. Über eine Leitung 179 wird der Wärmeträger in drei Zwischenräume zwischen den Wänden 167 geleitet.

Über die Leitung 181 wird der abgekühlte Wärmeträger aus zwei Zwischenräumen zwischen zwei Wänden 167 geleitet. Außerdem ist die Leitung 181 mit den Zwischenräumen zwischen einem Gehäuse des Speichermodus HM, KM verbunden. Dadurch ist es möglich, dass alle sechs Wände 167 gleichzeitig und über deren gesamte Fläche von dem Wärmeträger durchströmt werden. Das reduziert den Druckverlust erheblich und ermöglicht trotzdem einen sehr gute und schnelle Wärmeübertragung vom Wärmeträger auf das Speichermaterial und umgekehrt.

Bei diesem Ausführungsbeispiel sind die Leitungen 179 und 181 über Klappenkästen in denen jeweils eine Klappe angeordnet ist, mit der Wärmeübertragungsanlage 159, bzw. 161 verbunden.

Im oberen Teil der Figur 14 ist das Beladen eines Speichermoduls HM dargestellt. Im unteren Teil der Figur 14 ist das Entladen eines Speichermoduls HM dargestellt. Durch Umschalten der beiden Klappen wird die Strömungsrichtung des Wärmeträgers der Wärmeübertragungsanlage durch die Speicherwände 167 umgekehrt. Dadurch werden die Energieverluste beim Be- und Entladen nochmals verringert. Außerdem ist eine direkte Integration eines Speichermoduls in einen Gasstrom möglich, ohne dass der Gasstrom zwischen Beladen und Entladen seine Richtung ändern müsste.

Es ist empfehlenswert, wenn die Außenabmessungen eines Speicher-Moduls HM, KM denen eines Transport-Containers entsprechen. Dadurch können die Module in einer Fabrik gefertigt werden und kostengünstig zum Einsatzstandort transportiert werden. Alternativ können die Module direkt auf der Baustelle zusammengebaut werden. Dann sind natürlich auch deutlich größere Abmessungen möglich.

In der Regel sind das Gehäuse und die tragenden Elemente aus Stahl, bei einem Aufbau vor Ort können aufgrund der geringen Über- oder Unterdrücke gegenüber der Umgebung auch andere Werkstoffe zu Einsatz kommen, z.B. Beton. Das Befüllen mit Speichermaterial und Schließen der Module erfolgt vorzugsweise nach dem Aufstellen vor Ort.

Durch die Anordnung des Speichermaterials in Form von gas- bzw. luftdurchlässigen Wänden im Inneren des Moduls wird eine große Anströmfläche geschaffen. Dadurch reduziert sich die Anströmgeschwindigkeit des gasförmigen Wärmeträgers auf die Wände im Vergleich zu den Strömungsgeschwindigkeiten in den Leitungen. Dies führt zu einer exponentiellen Verringerung des Druckverlustes beim Durchströmen des Speichermaterials. Dadurch reduziert sich der Energiebedarf der Gebläse der Wärmeübertragungsanlagen 159 und 161.

Durch den Einsatz von feinkörnigem/granulatförmigem Speichermaterial wird der sogenannte Thermokline (Grenzschicht zwischen dem heißen und dem kalten Material in Strömungsrichtung) sehr schmal (ca. 5 - 35 cm). Die große Oberfläche des feinkörnigen Speichermaterials ermöglicht einen sehr guten Wärmeaustausch und erlaubt große thermische Leistungen beim Beladen und Entladen. Die große Oberfläche und der schmale Thermokline führen dazu, dass die Temperatur des Wärmeträgers beim Durchströmen des Speichermaterials beim Entladen sehr stabil bleibt. Sie fällt erst dann stärker ab wenn der Thermokline die Austrittsfläche erreicht.

Durch die modulare Bauweise, die Flexibilität bzgl. der Anzahl und Größe der Speichermaterial-Wände in einem Modul und die Möglichkeit die Module parallel zu beladen und entladen, können nicht nur große Wärmemengen gespeichert werden, sondern es besteht auch die Möglichkeit, die thermischen Leistungen beim Beladen und beim Entladen verschieden zu wählen. Beispielsweise kann beim Beladen eine große Wärmeleistung in kurzer Zeit aufgenommen werden (z.B. 100 MW für 2 Stunden indem zehn Module gleichzeitig parallel durchströmt werden. Beim Entladen kann dann eine geringe Leistung über einen langen Zeitraum abgerufen werden (z.B. 20 MW für 10 Stunden indem 2 Module parallel gleichzeitig entladen werden und dann auf die nächsten zwei Module umgeschaltet wird.

Um die Wärme für längere Zeiträume auf einem nutzbar hohen Niveau zu halten müssen die Module und die Leitungen gut gegen entsprechende Wärmeleitung wärmegedämmt sein und ein Durchströmen der Module im Stillstand durch Naturkonvektion muss durch Schließen der Klappen unterbunden werden.

Grundsätzlich hat es sich als vorteilhaft erwiesen, wenn die Durchströmungsrichtung durch das Speichermaterial zwischen Beladen und Entladen umgedreht wird.

Sollten die Speichermodule in ein System eingebaut werden, das unabhängig von Beladen und Entladen die gleiche Strömungsrichtung aufweist, so kann durch zwei geeignete angeordnete Umschaltklappen vor und nach einem Speichermodul eine umgekehrte Durchströmung des Speichermaterials erreicht werden. Eine derartige Anordnung von Umschaltklappen an einem Modul ist in Figur 14 in verschiedenen Schaltstellungen dargestellt. Dabei wird das Speichermodul in der oberen Darstellung in der Figur 14a beladen, das heiße Gas strömt ein und wird dann von oben über den Einströmkanal zwischen die Speichermaterial-Wände geleitet. Nach dem Durchströmen verlässt das Gas das Modul indem es zwischen den Speichermaterial-Wänden bzw. ganz außen zwischen den Modulwänden und den äußeren Speichermaterial-Wänden, nach oben zum Abströmkanal strömt und das Modul abgekühlt verlässt. In der Figur 14 unteren Darstellung sind nun beide Klappen umgeschaltet und die Durchströmungsrichtung durch das Modul wird umgekehrt.

Sollte nur eine der beiden Klappen umgeschaltet werden hat man einen Bypass geschaffen und das Gas kann direkt durch die jeweilige durchgeschaltete Leitung strömen. Ein derartiges Modul mit solchen Umschaltklappen kann auch dann interessant sein, wenn hinter dem Modul immer eine stabile Gastemperatur bzw. ein enger Temperaturbereich herrschen soll (z.B. um einen chemischen Prozess aufrecht zu erhalten), aber das einströmende Gas in seiner Temperatur stark schwanken kann.

## Patentansprüche

1. Thermischer Stromspeicher umfassend einen Hochtemperatur-Wärmespeicher (122-HM), einen Kältespeicher (122-KM), mindestens einen Kompressor (102) und mindestens eine Turbine (104),
wobei der Hochtemperatur-Wärmespeicher, die mindestens eine Turbine (104), der Kältespeicher und der mindestens eine Kompressor (102) durch Leitungen derart miteinander verbunden sind, dass ein in den Leitungen zirkulierendes gasförmiges Arbeitsmedium wahlweise einen linksläufigen Wärmepumpen-Kreisprozess oder einen rechtsläufigen Arbeits-Kreisprozess durchläuft,
wobei ein Auslass (151) des Kompressors (102) mit einem Einlass (153) der Turbine (104) verbunden ist, wobei ein Auslass (155) der Turbine (104) mit einem Einlass (157) des Kompressors (102) verbunden ist, wobei zwischen dem Auslass (151) des Kompressors (102) und dem einem Einlass (153) der Turbine (104) ein erster Wärmetauscher (116) vorgesehen ist,
wobei zwischen dem Auslass (155) der Turbine (104) und dem Einlass (157) des Kompressors (102) ein zweiter Wärmetauscher (126) vorgesehen ist,
wobei jeweils eine Seite des ersten Wärmetauschers (116) und des zweiten Wärmetauschers (126) von dem Arbeitsmedium durchströmt wird,
**dadurch gekennzeichnet,**
**dass** der Hochtemperatur-Wärmespeicher (112-HM) und der Kältespeicher (122-KM) als Festbett-Speicher ausgebildet sind,
**dass** zwischen dem ersten Wärmetauscher (126) und dem Hochtemperatur-Wärmespeicher (112-HM) eine erste Wärmeübertragungs-Anlage (159) vorgesehen ist,
**dass** zwischen dem zweiten Wärmetauscher (126) und dem Kältespeicher (122-KM) eine zweite Wärmeübertragungs-Anlage (161) vorgesehen ist,
und **dass** die Wärmeübertragungs-Anlagen (159, 161) mit einem gasförmigen Wärmeträgermedium arbeiten.

2. Thermischer Stromspeicher umfassend einen Hochtemperatur-Wärmespeicher (112-HM), einen Kältespeicher (122-KM), mindestens einen Kompressor (102) und mindestens eine Turbine (104),
wobei der Hochtemperatur-Wärmespeicher, die mindestens eine Turbine (104), der Kältespeicher und der mindestens eine Kompressor (102) durch Leitungen derart miteinander verbunden sind, dass ein in den Leitungen zirkulierendes gasförmiges Arbeitsmedium wahlweise einen linksläufigen Wärmepumpen-Kreisprozess oder einen rechtsläufigen Arbeits-Kreisprozess durchläuft,
wobei ein Auslass (151) des Kompressors (102) mit einem Einlass (153) der Turbine (104) verbunden ist, wobei ein Auslass (155) der Turbine (104) mit einem Einlass (157) des Kompressors (102) verbunden ist, wobei zwischen dem Auslass (151) des Kompressors (102) und dem einem Einlass (153) der Turbine (104) ein erster Wärmetauscher (116) vorgesehen ist,
wobei eine Seite des ersten Wärmetauschers (116) von dem Arbeitsmedium durchströmt wird,
**dadurch gekennzeichnet,**
**dass** der Hochtemperatur-Wärmespeicher (112-HM) und der Kältespeicher (122-KM) als Festbett-Speicher ausgebildet sind,
**dass** zwischen dem ersten Wärmetauscher (116) und dem Hochtemperatur-Wärmespeicher (112-HM) eine erste Wärmeübertragungs-Anlage (159) vorgesehen ist,
**dass** die erste Wärmeübertragungs-Anlage (159) mit einem gasförmigen Wärmeträgermedium arbeitet, und dass der Kältespeicher (122-KM) zwischen dem Auslass (155) einer Turbine (104) und dem Einlass (157) eines Kompressors (102) derart in den Kreisprozess eingebunden ist, dass das Arbeitsmedium durch den Kältespeicher (122-KM) strömt.

3. Thermischer Stromspeicher nach Anspruch 1 oder 2, wobei der Hochtemperatur-Wärmespeicher (112-HM) und/oder der Kältespeicher (122-KM) aus einem oder mehreren Speichermodulen (HM, KM) bestehen in denen feinkörniges/granulatförmiges bevorzugt mineralisches Speichermaterial vorhanden ist.

4. Thermischer Stromspeicher nach Anspruch 3, wobei das Speichermaterial in den Speichermodulen (HM, KM) in Form von luft- bzw. gasdurchlässigen Wänden (167) angeordnet ist.

5. Thermischer Stromspeicher nach einem der vorhergehenden Ansprüche, wobei die erste und die zweite Wärmeübertragungsanlage (159, 161) mindestens ein Gebläse (HF, KF), Rohrleitungen und Klappen (Hi, Kj) umfassen, und wobei die erste und die zweite Wärmeübertragungsanlage (159, 161) eingerichtet sind, um durch Betätigen der Klappen ein oder mehrere Speichermodule (HM, KM) zu beladen oder zu entladen.

6. Thermischer Stromspeicher nach einem der vorhergehenden Ansprüche, wobei er einen ersten Kompressor (102) für den Betrieb als linksläufiger Wärmepumpen-Kreisprozess und einen zweiten Kompressor (102 B) für den Betrieb als rechtsläufiger Arbeits-Kreisprozess umfasst.

7. Thermischer Stromspeicher nach einem der vorhergehenden Ansprüche, wobei er eine erste Turbine (104) für den Betrieb als linksläufiger Wärmepumpen-Kreisprozess und eine zweite Turbine (104 B) für den Betrieb als rechtsläufiger Arbeits-Kreisprozess umfasst.

8. Thermischer Stromspeicher nach einem der vorhergehenden Ansprüche, wobei er mindestens eine elektrische Maschine (100, 101) umfasst, und wobei die mindestens eine elektrische Maschine (100, 101) mit dem Kompressor (102) und/oder der Turbine (104) gekoppelt ist.

9. Verfahren zum Beladen eines thermischen Stromspeichers nach einem der Ansprüche 2 bis 8 umfassend die Verfahrensschritte:
Betreiben mindestens eines Kompressors und einer Turbine als linksläufigen Kreisprozess und
Betreiben der ersten Wärmeübertragungsanlage (159), so dass die Speichermodule (HM1 bis HMn) nacheinander oder gleichzeitig von dem Wärmeträger durchströmt werden.

10. Verfahren zum Beladen eines thermischen Stromspeichers nach einem der Ansprüche 1 sowie 3 bis 8 umfassend die Verfahrensschritte:
Betreiben mindestens eines Kompressors und einer Turbine als linksläufigen Kreisprozess,
Betreiben der ersten Wärmeübertragungsanlage (159), so dass die Speichermodule (HM1 bis HMn) nacheinander oder gleichzeitig von dem Wärmeträger durchströmt werden und
Betreiben der zweiten Wärmeübertragungsanlage (161), so dass die Speichermodule (KM1 bis KMn) nacheinander oder gleichzeitig von dem Wärmeträger durchströmt werden.

11. Verfahren zum Entladen eines thermischen Stromspeichers nach einem der Ansprüche 2 bis 8 umfassend die Verfahrensschritte:
Betreiben mindestens eines Kompressors und einer Turbine als rechtsläufigen Arbeits-Kreisprozess und
Betreiben der ersten Wärmeübertragungsanlage (159), so dass die Speichermodule (HM1 bis HMn) nacheinander oder gleichzeitig von dem Wärmeträger durchströmt werden.

12. Verfahren zum Entladen eines thermischen Stromspeichers nach einem der Ansprüche 1 sowie 3 bis 8 umfassend die Verfahrensschritte:
Betreiben mindestens eines Kompressors und einer Turbine als rechtsläufigen Kreisprozess,
Betreiben der ersten Wärmeübertragungsanlage (159), so dass die Speichermodule (HM1 bis HMn) nacheinander oder gleichzeitig von dem Wärmeträger durchströmt werden und
Betreiben der zweiten Wärmeübertragungsanlage (161), so dass die Speichermodule (KM1 bis KMn) nacheinander oder gleichzeitig von dem Wärmeträger durchströmt werden.

13. Verfahren nach einem der Ansprüche 9 bis 12, wobei die Strömungsrichtung des Wärmeträgers in der ersten Wärmeübertragungsanlage (159) und/oder der zweiten Wärmeübertragungsanlage (161) umgekehrt wird, wenn zwischen den Betriebsarten "Beladen" und "Entladen" gewechselt wird.

14. Verfahren nach einem der Ansprüche 9 bis 13, wobei die Speichermodule (HM, KM) einzeln beladen und/oder entladen werden.

15. Verfahren nach einem der Ansprüche 9 bis 13, wobei mehrere Speichermodule (HM, KM)) beim Beladen und/oder Entladen in Reihe oder parallel geschaltet sind.

## Claims

1. Thermal energy storage system comprising
a high-temperature heat storage unit (112-HM), a cold storage unit (122-KM), at least one compressor (102) and at least one turbine (104),
wherein the high-temperature heat storage unit, the at least one turbine (104), the cold storage unit and the at least one compressor (102) are connected together by lines such that a gaseous working medium circulating in the lines passes optionally through a counterclockwise heat-pump circuit process or a clockwise working circuit process, wherein an outlet (151) of the compressor (102) is connected to an inlet (153) of the turbine (104),
wherein an outlet (155) of the turbine (104) is connected to an inlet (157) of the compressor (102),
wherein a first heat exchanger (116) is provided between the outlet (151) of the compressor (102) and the one inlet (153) of the turbine (104),
wherein a second heat exchanger (126) is provided between the outlet (155) of the turbine (104) and the inlet (157) of the compressor (102),
wherein the working medium flows through a side of the first heat exchanger (116) and a side of the second heat exchanger (126),
**characterized in that**
the high-temperature heat storage unit (112-HM) and the cold storage unit (122-HM) are configured as packed-bed storage units,
that a first heat transmission system (159) is provided between the first heat exchanger (116) and the high-temperature heat storage unit (112-HM),
that a second heat transmission system (161) is provided between the second heat exchanger (126) and the cold storage unit (122-KM),
and that the heat transmission systems (159, 161) work with a gaseous heat carrier medium.

2. Thermal energy storage system comprising
a high-temperature heat storage unit (112-HM), a cold storage unit (122-KM), at least one compressor (102) and at least one turbine (104),
wherein the high-temperature heat storage unit, the at least one turbine (104), the cold storage unit and the at least one compressor (102) are connected together by lines such that a gaseous working medium circulating in the lines passes optionally through a counterclockwise heat-pump circuit process or a clockwise working circuit process, wherein an outlet (151) of the compressor (102) is connected to an inlet (153) of the turbine (104),
wherein an outlet (155) of the turbine (104) is connected to an inlet (157) of the compressor (102),
wherein a first heat exchanger (116) is provided between the outlet (151) of the compressor (102) and the one inlet (153) of the turbine (104),
wherein the working medium flows through a side of the first heat exchanger (116), **characterized in that**
the high-temperature heat storage unit (112-HM) and the cold storage unit (122-HM) are configured as packed-bed storage units,
that a first heat transmission system (159) is provided between the first heat exchanger (116) and the high-temperature heat storage unit (112-HM),
that the first heat transmission system (159) works with a gaseous heat carrier medium, and
that the cold storage unit (122-KM) is integrated in the circuit process between the outlet (155) of a turbine (104) and the inlet (157) of a compressor (102) such that the working medium flows through the cold storage unit (122-KM).

3. Thermal energy storage system according to claim 1 or 2, wherein the high-temperature heat storage unit (112-HM) and/or the cold storage unit (122-KM) consist of one or more storage modules (HM, KM) in which fine-grained/granulate, preferably mineral, storage material is provided.

4. Thermal energy storage system according to claim 3, wherein the storage material is arranged in the storage modules (HM, KM) in the form of air-permeable or gas-permeable walls (167).

5. Thermal energy storage system according to any of the preceding claims, wherein the first and second heat transmission systems (159, 161) comprise at least one fan (HF, KF), pipelines and flaps (Hi, Kj), and wherein the first and second heat transmission systems (159, 161) are configured to charge or discharge one or more storage modules (HM, KM) by activation of the flaps.

6. Thermal energy storage system according to any of the preceding claims, comprising a first compressor (102) for operation as a counterclockwise heat pump circuit process, and a second compressor (102 B) for operation as a clockwise working circuit process.

7. Thermal energy storage system according to any of the preceding claims, comprising a first turbine (104) for operation as a counterclockwise heat pump circuit process, and a second turbine (104 B) for operation as a clockwise working circuit process.

8. Thermal energy storage system according to any of the preceding claims, comprising at least one electrical machine (100, 101), wherein the at least one electrical machine (100, 101) is coupled to the compressor (102) and/or the turbine (104).

9. Method for charging a thermal energy storage system according to any of claims 2 to 8, comprising the method steps:
operation of at least one compressor and a turbine as a counterclockwise circuit process, and
operation of the first heat transmission system (159) so that the heat carrier flows through the storage modules (HM1 to HMn) successively or simultaneously.

10. Method for charging a thermal energy storage system according to any of claims 1 and 3 to 8, comprising the method steps:
operation of at least one compressor and a turbine as a counterclockwise circuit process, and
operation of the first heat transmission system (159) so that the heat carrier flows through the storage modules (HM1 to HMn) successively or simultaneously, and
operation of the second heat transmission system (161) so that the heat carrier flows through the storage modules (KM1 to KMn) successively or simultaneously.

11. Method for discharging a thermal energy storage system according to any claims 2 to 8, comprising the method steps:
operation of at least one compressor and a turbine as a clockwise working circuit process, and
operation of the first heat transmission system (159) so that the heat carrier flows through the storage modules (HM1 to HMn) successively or simultaneously.

12. Method for discharging a thermal energy storage system according to any of claims 1 and 3 to 8, comprising the method steps:
operation of at least one compressor and a turbine as a clockwise circuit process, and
operation of the first heat transmission system (159) so that the heat carrier flows through the storage modules (HM1 to HMn) successively or simultaneously, and
operation of the second heat transmission system (161) so that the heat carrier flows through the storage modules (KM1 to KMn) successively or simultaneously.

13. Method according to any of claims 9 to 12, wherein the flow direction of the heat carrier in the first heat transmission system (159) and/or the second heat transmission system (161) is reversed on switching between the "charge" and "discharge" operating modes.

14. Method according to any of claims 9 to 13, wherein the storage modules (HM, KM) are charged and/or discharged individually.

15. Method according to any of claims 9 to 13, wherein several storage modules (HM, KM) are connected in series or parallel during charging and/or discharging.

## Revendications

1. Dispositif de stockage d'énergie thermique comprenant un accumulateur de chaleur à haute température (112-HM), un accumulateur de froid (122-KM), au moins un compresseur (102) et au moins une turbine (104),
dans lequel l'accumulateur de chaleur à haute température, la au moins une turbine (104), l'accumulateur de froid et le au moins un compresseur (102) sont reliés les uns aux autres par des conduites de sorte qu'un milieu de travail gazeux circulant dans les conduites passe au choix par un cycle de fonctionnement de pompe à chaleur à déplacement à gauche ou par un cycle de fonctionnement de travail à déplacement à droite,
dans lequel une sortie (151) du compresseur (102) est reliée à une certaine entrée (153) de la turbine (104), dans lequel une sortie (155) de la turbine (104) est reliée à une entrée (157) du compresseur (102), dans lequel un premier échangeur de chaleur (116) est prévu entre la sortie (151) du compresseur (102) et la certaine entrée (153) de la turbine (104)
dans lequel un second échangeur de chaleur (126) est prévu entre la sortie (155) de la turbine (104) et l'entrée (157) du compresseur (102),
dans lequel un côté du premier échangeur de chaleur (116) et du second échangeur de chaleur (126) est traversé par le milieu de travail,
**caractérisé en ce que**
l'accumulateur de chaleur à haute température (112-HM) et l'accumulateur de froid (122-KM) sont réalisés sous forme d'accumulateurs à lit solide,
une première installation de transfert de chaleur (159) est prévue entre le premier échangeur de chaleur (116) et l'accumulateur de chaleur à haute température (112-HM), une seconde installation de transfert de chaleur (161) est prévue entre le second échangeur de chaleur (126) et l'accumulateur de froid (122-KM),
et **en ce que** les installations de transfert de chaleur (159, 161) fonctionnent avec un milieu de transfert de chaleur gazeux.

2. Dispositif de stockage d'énergie thermique comprenant un accumulateur de chaleur à haute température (112-HM), un accumulateur de froid (122-KM), au moins un compresseur (102) et au moins une turbine (104),
dans lequel l'accumulateur de chaleur à haute température, la au moins une turbine (104), l'accumulateur de froid et le au moins un compresseur (102) sont reliés les uns aux autres par des conduites de sorte qu'un milieu de travail gazeux circulant dans les conduites passe au choix par un cycle de fonctionnement de pompe à chaleur à gauche ou par un cycle de fonctionnement de travail à droite,
dans lequel une sortie (151) du compresseur (102) est reliée à une certaine entrée (153) de la turbine (104), dans lequel une sortie (155) de la turbine (104) est reliée à une entrée (157) du compresseur (102), dans lequel un premier échangeur de chaleur (116) est prévu entre la sortie (151) du compresseur (102) et la certaine entrée (153) de la turbine (104),
dans lequel un côté du premier échangeur de chaleur (116) est traversé par le milieu de travail,
**caractérisé en ce que**
l'accumulateur de chaleur à haute température (112-HM) et l'accumulateur de froid (122-KM) sont réalisés sous forme d'accumulateurs à lit solide,
une première installation de transfert de chaleur (159) est prévue entre le premier échangeur de chaleur (116) et l'accumulateur de chaleur à haute température (112-HM), la première installation de transfert de chaleur (159) fonctionne avec un milieu de transfert de chaleur gazeux, et l'accumulateur de froid (122-KM) est intégré dans le cycle de fonctionnement entre la sortie (155) d'une turbine (104) et l'entrée (157) d'un compresseur (102) de sorte que le milieu de travail s'écoule à travers l'accumulateur de froid (122-KM).

3. Dispositif de stockage d'énergie thermique selon la revendication 1 ou 2, dans lequel l'accumulateur de chaleur à haute température (112-HM) et/ou l'accumulateur de froid (122-KM) se composent d'un ou de plusieurs modules d'accumulateur (HM, KM) dans lesquels est présent un matériau d'accumulateur à grains fins/granulaire de préférence minéral.

4. Dispositif de stockage d'énergie thermique selon la revendication 3, dans lequel le matériau d'accumulateur est agencé dans les modules d'accumulateur (HM, KM) sous la forme de parois perméables à l'air ou au gaz (167).

5. Dispositif de stockage d'énergie thermique selon l'une quelconque des revendications précédentes, dans lequel les première et seconde installations de transfert de chaleur (159, 161) comprennent au moins un ventilateur (HF, KF), des conduites et des volets (Hi, Kj), et dans lequel les première et seconde installation de transfert de chaleur (159, 161) sont agencées pour charger ou décharger un ou plusieurs modules d'accumulateur (HM, KM) en actionnant les volets.

6. Dispositif de stockage d'énergie thermique selon l'une quelconque des revendications précédentes, comprenant un premier compresseur (102) destiné à fonctionner dans un cycle de fonctionnement de pompe à chaleur à déplacement à gauche et un second compresseur (102 B) destiné à fonctionner dans un cycle de fonctionnement de travail à déplacement à droite.

7. Dispositif de stockage d'énergie thermique selon l'une quelconque des revendications précédentes, comprenant une première turbine (104) destinée à fonctionner dans un cycle de fonctionnement de pompe à chaleur à déplacement à gauche et une seconde turbine (104 B) destinée à fonctionner dans un cycle de fonctionnement de travail à déplacement à droite.

8. Dispositif de stockage d'énergie thermique selon l'une quelconque des revendications précédentes, comprenant au moins une machine électrique (100, 101), et dans lequel ladite au moins une machine électrique (100, 101) est couplée au compresseur (102) et/ou à la turbine (104).

9. Procédé de chargement d'un dispositif de stockage d'énergie thermique selon l'une quelconque des revendications 2 à 8, comprenant les étapes consistant à :
faire fonctionner au moins un compresseur et une turbine dans un cycle de fonctionnement à déplacement à gauche et
faire fonctionner la première installation de transfert de chaleur (159) de telle sorte que les modules d'accumulateur (HM1 à HMn) sont traversés les uns après les autres ou simultanément par le milieu de transfert de chaleur.

10. Procédé de chargement d'un dispositif de stockage d'énergie thermique selon l'une quelconque des revendications 1 et 3 à 8, comprenant les étapes consistant à :
faire fonctionner au moins un compresseur et une turbine dans un cycle de fonctionnement à déplacement à gauche,
faire fonctionner la première installation de transfert de chaleur (159) de telle sorte que les modules d'accumulateur (HM1 à HMn) sont traversés les uns après les autres ou simultanément par le milieu de transfert de chaleur, et
faire fonctionner la seconde installation de transfert de chaleur (161) de telle sorte que les modules d'accumulateur (KM1 à KMn) sont traversés les uns après les autres ou simultanément par le milieu de transfert de chaleur.

11. Procédé de décharge d'un dispositif de stockage d'énergie thermique selon l'une quelconque des revendications 2 à 8, comprenant les étapes consistant à :
faire fonctionner au moins un compresseur et une turbine dans un cycle de fonctionnement de travail à déplacement à droite, et
faire fonctionner la première installation de transfert de chaleur (159) de telle sorte que les modules d'accumulateur (HM1 à HMn) sont traversés les uns après les autres ou simultanément par le milieu de transfert de chaleur.

12. Procédé de décharge d'un dispositif de stockage d'énergie thermique selon l'une quelconque des revendications 1 et 3 à 8, comprenant les étapes consistant à :
faire fonctionner au moins un compresseur et une turbine dans un cycle de fonctionnement à déplacement à droite,
faire fonctionner la première installation de transfert de chaleur (159) de telle sorte que les modules d'accumulateur (HM1 à HMn) sont traversés les uns après les autres ou simultanément par le milieu de transfert de chaleur, et
faire fonctionner la seconde installation de transfert de chaleur (161) de telle sorte que les modules d'accumulateur (KM1 à KMn) sont traversés les uns après les autres ou simultanément par le milieu de transfert de chaleur.

13. Procédé selon l'une quelconque des revendications 9 à 12, dans lequel la direction d'écoulement du milieu de transfert de chaleur dans la première installation de transfert de chaleur (159) et/ou la seconde installation de transfert de chaleur (161) est inversée en alternant entre les modes de fonctionnement de « chargement » et de « déchargement ».

14. Procédé selon l'une quelconque des revendications 9 à 13, dans lequel les modules d'accumulateur (HM, KM) sont chargés et/ou déchargés individuellement.

15. Procédé selon l'une quelconque des revendications 9 à 13, dans lequel plusieurs modules d'accumulateur (HM, KM) sont connectés en série ou en parallèle lors du chargement et/ou du déchargement.
